# EUROPEAN PATENT APPLICATION

(11) **EP 3 654 495 A1**
(43) Date of publication of application: **20.05.2020**
(21) Application number: 18206887.4
(22) Date of filing: 19.11.2018
(51) Int. Cl.: H02K 1/20, H02K 9/19, H02K 9/22

(54) **A STATOR OF AN ELECTRIC MACHINE**

(71) Applicant: ABB Schweiz AG, 5400 Baden (CH)
(72) Inventor: Känsäkangas, Tero, 65320 Vaasa (FI)
(74) Representative: Kolster Oy Ab

(57) **Abstract**

The stator comprises a longitudinal stator core (210) having a longitudinal centre axis (X-X), a radial inner surface (210A) and a radial outer surface (210B), an opening (211) extending along the centre axis (X-X) through the stator core (210), the stator core (210) being composed of stator sheets (230) stacked together to form the stator core (210). The stator core (210) comprises further at least one cooling sheet (240) provided in the stack of stator sheets (230), the interior of the cooling sheet (240) between the radial inner surface (210A) and the radial outer surface (210B) of the stator core (210) being provided with a substantially annular cooling duct (R1) for a cooling fluid.

## Description

### FIELD

The invention relates to a stator of an electric machine.

Electric machines i.e. electric motors and electric generators are used in many applications. Electric motors are used to drive different kinds of machines and electric generators are used to produce electric power.

An electric machine may comprise a rotatable rotor and a stationary stator. The stator may comprise a longitudinal stator core with a longitudinal centre axis and a stator winding fitted to the stator core. A bore in the centre of the stator core may receive the rotor. The stator winding may have a straight portion running along axial slots extending inwards into the stator core from the inner surface of the stator core and winding overhangs extending outwards from the respective axial end of the stator core. A frame may further surround an outer surface of the stator core, whereby the stator core is attached to the frame.

### SUMMARY

An object of the present invention is to achieve an improved stator of an electric machine.

The stator of the electric machine according to the invention is defined in claim 1.

The stator of electric machine comprises a longitudinal stator core having a longitudinal centre axis, an radial inner surface and a radial outer surface, an opening extending along the centre axis through the stator core, the stator core being composed of stator sheets stacked together to form the stator core. The stator core comprises further at least one cooling sheet provided in the stack of stator sheets, the interior of the cooling sheet between the radial inner surface and the radial outer surface of the stator core being provided with a substantially annular cooling duct for a cooling fluid.

The invention provides for an enhanced cooling of the stator of an electric machine, which makes it possible to achieve a high power density in the electric machine.

The shape of the cooling plate may correspond to the shape of the stator sheets forming the stator core. The cooling sheet may thus be manufactured with existing pressing tools. It is thus possible to add cooling to the stator with minimal modifications to existing pressing tools.

The flow of cooling fluid in the cooling sheets may easily be directed in a desired way by arranging the inlet and the outlet of the cooling fluid in the stator of the electric machine in a corresponding way. It is also easy to change the direction of the flow of the cooling fluid in the cooling sheets by changing the inlet and outlet of the cooling fluid.

The invention makes it possible to assemble the stator stack by using an existing stack manufacturing process i.e. welding. This means that the time for assembling the stator stack will not be prolonged.

Each cooling sheet forms a plate heat exchanger within the stator core.

### DRAWINGS

In the following the invention will be described in greater detail by means of preferred embodiments with reference to the attached drawings, in which
Figure 1 shows a longitudinal cross section of an electric machine,
Figure 2 shows a transverse cross section of an electric machine,
Figure 3 shows a longitudinal cross section of an electric machine,
Figure 4 shows a cross section of a first embodiment of a cooling sheet of a stator of an electric machine,
Figure 5 shows a cross section of a second embodiment of a cooling sheet of a stator of an electric machine,
Figure 6 shows a side view of a cooling sheet of a stator of an electric machine.

### DETAILED DESCRIPTION

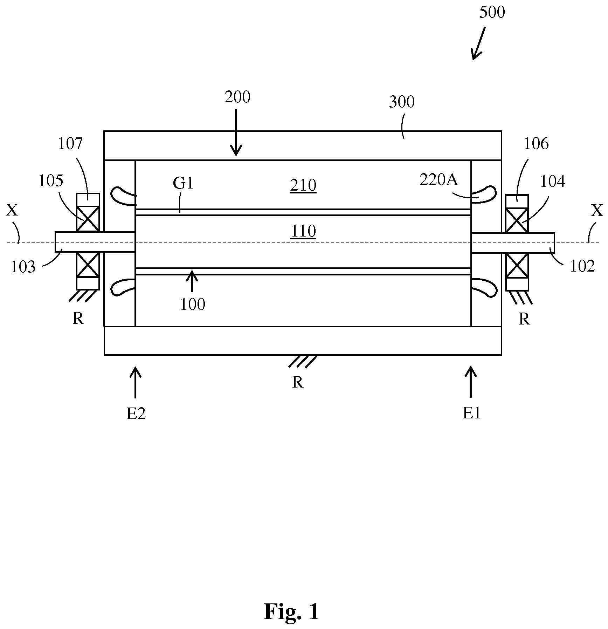

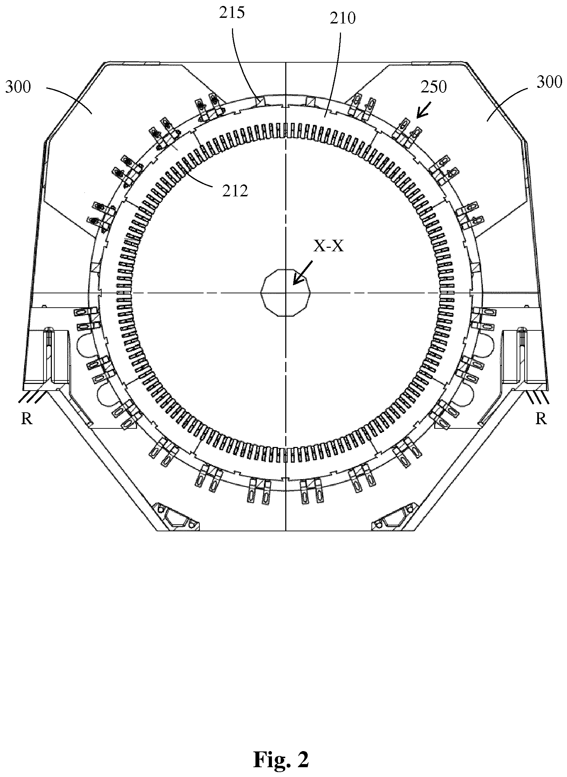

Fig. 1 shows a longitudinal cross section and figure 2 shows a transverse cross section of an electric machine.

The electric machine 500 may comprise a longitudinal centre axis X-X, a cylindrical rotor 100, a longitudinal stator 200 surrounding the rotor 100 and a frame 300 surrounding the stator 200. The rotor is not for clarity reasons shown in figure 2.

The rotor 100 may comprise a middle portion 110 provided with a rotor winding (not shown in the figure) and two end portions 102, 103 at each axial X-X end of the middle portion 110. Each end portion 102, 103 of the rotor 100 may be rotatably supported on a bearing 104, 105 provided in a bearing house 106, 107, which may be supported on a support structure R.

The stator 200 may comprise a stator core 210 and a stator winding. The figure shows only the winding ends 220A i.e. the winding overhangs of the stator winding. The stator core 210 may have a longitudinal shape. The longitudinal centre axis X-X of the electric machine 500 may coincide with the longitudinal centre axis of the stator core 210. An opening 211 may extend along the centre axis X-X of the stator core 210 through the stator core 210. The rotor 100 may be positioned within the opening 211. The stator core 210 may further comprise a first axial X-X end E1 and an opposite second axial X-X end E2.

The frame 300 may be of any construction. An outer surface of the stator core 210 may be provided with axially extending back-beams 215. The axial back-beams 215 may be welded to the outer surface of the stator core 210. The stator core 210 may be fastened with fastening means 250 based on a compression joint to the frame 300. The fastening means 250 may comprise L-shaped brackets extending between the back-beams 215 and the frame 300. A first branch of the L-shaped brackets 250 may be attached with bolts passing through the brackets and the back-beams 215. A second branch of the L-shaped brackets 250 may be attached with bolts passing through the brackets and the frame 300. Another possibility is that the stator core 210 is attached through welding to the frame 300. The stator 200 and the frame 300 is supported on a support structure R.

There is an air gap G1 between the outer surface of the middle portion 110 of the rotor 100 and the inner surface of the stator core 210.

The electric machine 500 can be an electric motor or an electric generator.

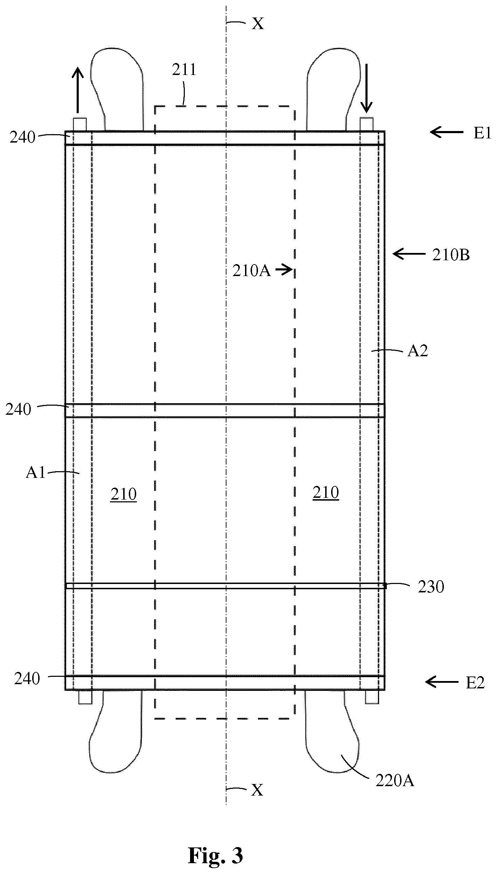

Figure 3 shows a longitudinal cross section of an electric machine. The figure shows the stator of the electric machine.

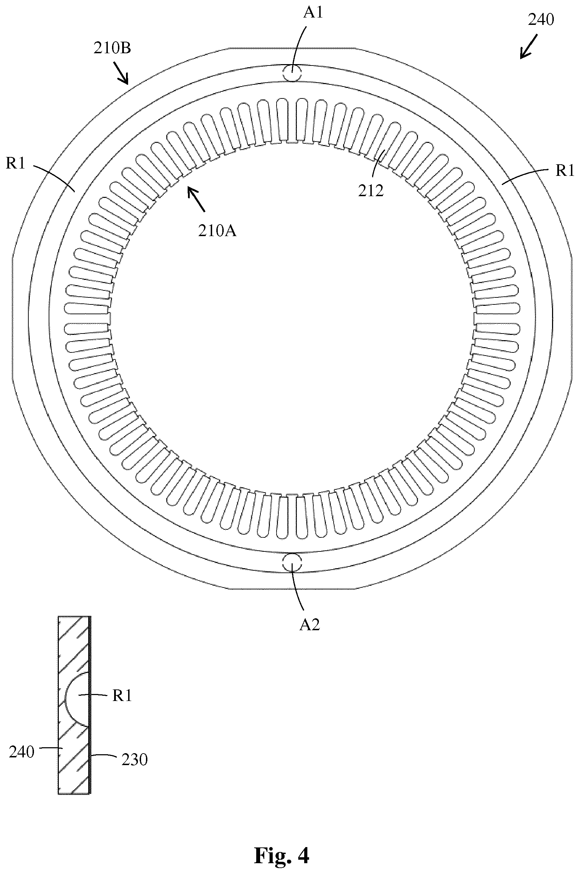

The stator comprises a stator core 210 and a stator winding of which only the ends 220A protruding out from each axial X-X end E1, E2 of the stator core 210 are shown in the figure. The stator core 210 may have a longitudinal shape provided with a central opening 211 extending along the centre axis X-X through the stator core 210. The opening 211 may receive the rotor 100 of the electric machine 500. The stator core 210 may have a radial inner surface 210A and a radial outer surface 210B. The radial inner surface 210A of the stator core 210 defines the radial outer perimeter of the opening 211. The radial inner surface 210A of the stator core 210 may be provided with slots 212 extending into the stator core 210 receiving the stator winding (shown in figure 4).

The stator core 210 may be formed of stator sheets 230 stacked together to form the stator core. The stator sheets 230 may be of any shape with a substantially circular inner perimeter. The outer perimeter of the stator sheets 230 may have any geometrical shape e.g. it may be circular, elliptic, rectangular or polygonal or a combination of any of these. The stator core 210 may thus have a substantially cylindrical shape in case the radial inner perimeter and the radial outer perimeter are substantially circular. The stator core 210 may comprise three cooling sheets 240 as shown in the embodiment shown in the figure. A first cooling sheet 240 may be positioned at a first axial X-X end E1 of the stator core 210, a second cooling sheet 240 may be positioned at a second axial X-X end E2 of the stator core 210, and a third cooling sheet 240 may be positioned in an axial X-X middle portion of the stator core 210.

The pack of stator sheets 230 and cooling sheets 240 may be pressed together by axially X-X extending back beams which are attached e.g. by welding to the outer surface 210B of the stator core 210. (Not shown in the figure).

The stator core 210 may further be provided with axially X-X extending cooling ducts A1, A2. The axial cooling ducts A1, A2 may extend along the whole axial X-X length of the stator core 210. The axial cooling ducts A1, A2 may be formed of axial pipes extending between the cooling sheets 240. Pipes may extend between the cooling sheet 240 at the first end E1 of the stator core 210 and the cooling sheet 240 at the middle of the stator core 210. Pipes may further extend between the cooling sheet 240 at the second end E2 of the stator core 210 and the cooling sheet 240 at the middle of the stator core 210. The outer openings of the cooling sheet 240 at the first end E1 of the stator core 210 may be connected to an external cooling circuit. The outer openings in the cooling sheet 240 at the second end E2 of the stator core 210 may be blocked. A cooling fluid may thus be circulated from the outer cooling circuit to the cooling sheet 240 at the first end E1 of the stator core 210 and further through the axial pipes to the cooling sheet 240 at the middle of the stator core 210 and further through the axial pipes to the cooling sheet 240 at the second end E2 of the stator core 210 and back again to the external cooling circuit. The external cooling circuit may be provided with a heat exchanger for cooling the cooling fluid. The axial pipes may extend in axial passages provided in the sheets 230 of the stator core 210. The axial pipes may be of a magnetically non-conducting material in order to avoid currents flowing in the pipes. Such currents could heat the pipes and cause losses. The axial pipes may further be flexible in the axial direction. The package of stator sheets will be pressed in the axial direction before the stator package is locked together. The locking of the stator package may be done by welding back beams to an outer surface of the stator package. Another possibility is to use end sheets and axial bolts passing between the end sheets for pressing the package together. The axial flexibility of the pipes will prevent the pipes from braking when the stator package is pressed together in the axial direction.

The axial cooling ducts A1, A2 may be open at the first axial X-X end E1 of the stator core 210 and closed at the second axial X-X end E2 of the stator core 210. The inlet and the outlet for the cooling fluid will thus be positioned at the first axial X-X end E1 of the stator core 210. It would naturally be possible to have an inlet for the cooling liquid at the second axial X-X end E2 of each axial cooling duct A1. A2 and an outlet for the cooling liquid at the first axial X-X end E1 of each axial cooling duct A1, A2.

Figure 4 shows a cross section of a first embodiment of a cooling sheet of a stator of an electric machine.

The cooling sheet 240 may be formed of a metal sheet having a good thermal conductivity. The shape of the cooling sheet 240 may correspond to the shape of the stator sheets 230 forming the stator core 210. The cooling sheet 240 may have a substantially annular shape with an inner perimeter 210A corresponding to the inner surface 210A of the stator core 210 and an outer perimeter 210B corresponding to the outer surface 210B of the stator core 210. The cooling sheet 240 may further be provided with slots 212 extending from the inner perimeter 210A outwards into the cooling sheet 240. The slots 212 may receive the stator winding.

The cooling sheet 240 may further be provided with an annular cooling duct R1. The annular cooling duct R1 may form an internal cooling duct within the cooling sheet 240. The axial cooling ducts A1, A2 may open into the annular cooling duct R1 within the cooling sheet 240. A cooling fluid flowing in the axial inlet cooling duct A1 may be distributed to the annular cooling duct R1 within the cooling sheet 240. The cooling fluid may flow in each branch of the annular cooling duct R1 downwards towards the outlet cooling duct A2. The cooling fluid may then be conducted outwards from the stator core 210 and further to the external cooling circuit with the axial outlet cooling duct A2. The cooling fluid may then be cooled in the heat exchanger in the external cooling circuit before it is introduced again into the stator core 210 with the axial inlet cooling duct A1.

The cross section A-A in the figure shows a cross section of the annular cooling duct R1. The annular cooling duct R1 may be formed into the cooling sheet 240 by milling a groove R1 from a first side surface into the cooling sheet 240. The cross section of the groove R1 has in this embodiment the shape of a half circle, but the cross section of the groove R1 could naturally be of any shape e.g. rectangular, trapezoidal, elliptic etc. The groove R1 may then be closed by attaching a stator sheet 230 e.g. by glue to the first side surface of the cooling sheet 240. A closed annular cooling duct R1 is thus formed into the cooling sheet 240.

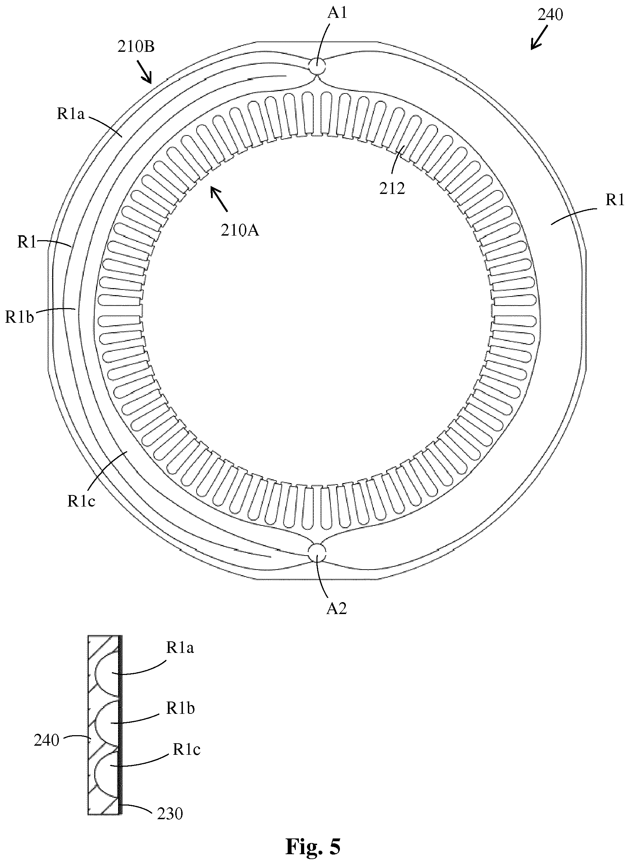

Figure 5 shows a cross section of a second embodiment of a cooling sheet of a stator of an electric machine.

The cooling sheet 240 may also in this embodiment be formed of a metal sheet having a good thermal conductivity. The shape of the cooling sheet 240 may correspond to the shape of the stator sheets 230 forming the stator core 210. The cooling sheet 240 may have a substantially annular shape with an inner perimeter 210A corresponding to the inner surface 210A of the stator core 210 and an outer perimeter 210B corresponding to the outer surface 210B of the stator core 210. The cooling sheet 240 may further be provided with slots 212 extending from the inner perimeter 210A outwards into the cooling sheet 240. The slots 212 may receive the stator winding.

The cooling sheet 240 may further be provided with an annular cooling duct R1. The annular cooling duct R1 forms an internal cooling duct within the cooling sheet 240. The axial cooling ducts A1, A2 open into the annular cooling duct R1 within the cooling sheet 240. The annular cooling duct R1 on the left side in the figure is formed of several radially adjacent cooling duct portions R1a, R1b, R1c. A first upper end of a first outer cooling duct portion R1a of the annular cooling duct R1 is connected to the axial inlet cooling duct A1. A second lower end of the first outer cooling duct portion R1a of the annular cooling duct R1 is connect to a second lower end of the second intermediate cooling duct portion R1b of the annular cooling duct R1. A first upper end of the second intermediate cooling duct portion R1b of the annular cooling duct R1 is connected to a first upper end of the third inner cooling duct portion R1c of the annular cooling duct R1. A second lower end of the third inner cooling duct portion R1c of the annular cooling duct R1 is connected to the axial outlet cooling duct A2.

A cooling fluid flowing in the axial inlet cooling duct A1 is in the left side of the figure directed first through the first outer cooling duct portion R1a, then through the second intermediate cooling duct portion R1b, and finally through the third inner cooling duct portion R1c to the axial outlet cooling duct A2.

The cooling fluid flows thus in opposite direction in adjacent cooling duct portions R1a, R1b, R1c in the annular cooling duct R1. This is an advantageous embodiment, but the arrangement could naturally also be such that the cooling fluid flows in the same direction in all or in some of the cooling duct portions R1a, R1b, R1c.

The annular cooling duct R1 on the right side in the figure may correspond to the annular cooling duct on the left side of the figure. The other possibility is that the annular cooling duct R1 on the right side in the figure has a different shape compared to the annular cooling duct R1 on the left side of the figure. The annular cooling duct R1 on the right side in the figure could be formed of a single cooling duct as shown in the figure.

The cooling fluid may after passing through the axial outlet cooling duct A2 to the end E1 of the stator core 210, flow onwards to the external cooling circuit. The cooling fluid may then be cooled in the heat exchanger in the external cooling circuit before it is introduced again into the stator core 210 with the axial inlet cooling duct A1.

The cross section A-A in the figure shows a cross section of the annular cooling duct R1 on the left side of the main figure. The annular cooling duct R1 may be formed into the cooling sheet 240 by milling three grooves R1a, R1b, R1c from a first side surface into the cooling sheet 240. The ends of the grooves R1a, R1b, R1c may be connected as shown in the main figure. The cross section of the grooves R1a, R1b, R1c have in this embodiment the shape of a half circle, but the cross section of the grooves R1a, R1b, R1c could naturally be of any shape e.g. rectangular, trapezoidal, elliptic etc. The grooves R1a, R1b, R1c may then be closed by attaching a stator sheet 230 e.g. by glue to the first side surface of the cooling sheet 240. A closed annular cooling duct R1 formed of three cooling duct portions R1a, R1b, R1c may thus be formed into the cooling sheet 240.

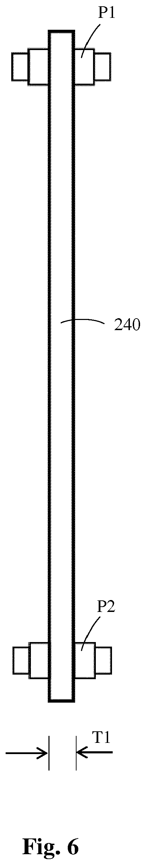

Figure 6 shows a side view of a cooling sheet of a stator of an electric machine.

The cooling sheet 240 may be of metal having a good thermal conductivity. The thickness T1 of the cooling sheet 240 may be in the range of 4 to 8 mm. The cooling sheet 240 may be provided with an inlet opening P1 and an outlet opening P2 for the pipes forming the axial cooling ducts A1, A2. The pipes may be pushed on fittings in the inlet opening P1 and in the outlet opening P2. The inlet opening P1 and the outlet opening P2 may be formed as a lead-through, whereby cooling fluid may flow in the axial direction X-X through the cooling sheet 240. The inlet opening P1 and the outlet opening P2 provide a passage for the cooling fluid into the annular cooling duct R1 within the cooling sheet 240. The inlet opening P1 and the outlet opening P2 need not be formed as a lead-through i.e. they may be formed to only provide passage for the cooling fluid into the annular cooling duct R1 within the cooling sheet 240.

The axial cooling ducts A1, A2 may be formed of pipes or tubes extending through axial openings in the stator sheets 230. The pipes or tubes may be connected to the inlet opening P1 and the outlet opening P2 in the cooling sheets 240. The embodiment shown in figure 3 may thus be provided with pipes or tubes extending between the cooling sheet 240 at the first end E1 of the stator core 210 and the cooling sheet 240 at the middle of the stator core 210 and with pipes or tubes extending between the cooling sheet 240 at the second end E2 of the stator core 210 and the cooling sheet 240 at the middle of the stator core 210.

The figures show only two axial cooling ducts A1, A2 in the stator core 210, but there could be any number of axial cooling ducts A1, A2 in the stator core 210. There could thus be at least two axial cooling ducts A1, A2 in the stator core 210.

The axial cooling ducts A1, A2 are in the figures in flow communication with each of the cooling sheets 240 of the stator core 210. This is an advantageous embodiment when only two axial cooling ducts A1, A2 are used as shown in the figures. There could, however, be any number of axial cooling ducts A1, A2, whereby the axial cooling ducts A1, A2 could be connected in any pattern to the annular cooling duct R1 in the cooling sheets 240. The arrangement could e.g. be such that each cooling sheet 240 is provided with a pair of axial cooling ducts A1, A2 of its own.

The inlet opening P1 and the outlet opening P2 in the cooling sheet 240 are axially X-X directed in the figures. This is an advantageous embodiment in view of connecting the inlet opening A1 and the outlet opening A2 to the axial cooling ducts A1, A2. It would, however, be possible e.g. to use a curved connection piece for the connection.

The stator 210 in the electric machine is cooled by a cooling fluid e.g. water. The ends of the axial pipes forming the axial cooling ducts A1, A2 may be connected to an external cooling circuit. The external cooling circuit may comprise a heat exchanger for cooling the cooling fluid that has been heated when circulated through the stator core 210.

The material used in the stator sheets 230 may be so called electrical steel, which is a soft magnetic material providing a high magnetic flux density.

The material used in the cooling sheets 240 may be stainless steel or aluminium.

It will be obvious to a person skilled in the art that, as the technology advances, the inventive concept can be implemented in various ways. The invention and its embodiments are not limited to the examples described above but may vary within the scope of the claims.

## Claims

1. A stator of an electric machine, the stator (200) comprising a longitudinal stator core (210) having a longitudinal centre axis (X-X), a radial inner surface (210A) and a radial outer surface (210B), an opening (211) extending along the centre axis (X-X) through the stator core (210), the stator core (210) being composed of stator sheets (230) stacked together to form the stator core (210), **characterized in that** the stator core (210) comprises further at least one cooling sheet (240) provided in the stack of stator sheets (230), the interior of the cooling sheet (240) between the radial inner surface (210A) and the radial outer surface (210B) of the stator core (210) being provided with a substantially annular cooling duct (R1) for a cooling fluid.

2. A stator according to claim 1, **characterized in that** the cooling sheet (240) is provided with an inlet opening (P1) and an outlet opening (P2) for the cooling fluid, the inlet opening (P1) and the outlet opening (P2) being in fluid communication with the substantially annular cooling duct (R1) in the cooling sheet (240).

3. A stator according to claim 1 or 2, **characterized in that** the inlet opening (P1) is positioned in an upper portion of the cooling sheet (240) and the outlet opening (P2) is positioned in a lower portion of the cooling sheet (240).

4. A stator according to claim 2 or 3, **characterized in that** axial cooling ducts (A1, A2) pass in an axial direction (X-X) through the stator core (210) between the cooling sheets (240), said axial cooling ducts (A1, A2) connecting the inlet openings (P1) and the outlet openings (P2) in the cooling sheets (240).

5. A stator according to any of claims 1 to 4, **characterized in that** the stator core (210) is provided with a cooling sheet (240) at both axial (X-X) ends (E1, E2) of the stator core (210) and with at least one cooling sheet (240) in an axial (X-X) middle portion of the stator core (210).

6. A stator according to any of claims 1 to 5, **characterized in that** the substantially annular cooling duct (R1) in the cooling sheet (240) is formed as one solid duct.

7. A stator according to any of claims 1 to 5, **characterized in that** the substantially annular cooling duct (R1) in the cooling sheet (240) is formed as several cooling duct portions (R1a, R1b, R1c).

8. A stator according to claims 7, **characterized in that** the cooling fluid flows in an opposite direction in adjacent cooling duct portions (R1a, R1b, R1c).
